# EUROPÄISCHE PATENTSCHRIFT

(11) **EP 3 377 382 B1**
(45) Veröffentlichungstag und Bekanntmachung des Hinweises auf die Patenterteilung: **30.07.2025**
(21) Anmeldenummer: 16794323.2
(22) Anmeldetag: 10.11.2016
(51) Int. Cl.: B60T 8/17, B60W 50/029, B60W 60/00, B60K 28/10, G01C 21/34, B60W 30/16

(54) **VERFAHREN UND VORRICHTUNG ZUM ASSISTIERTEN, TEILAUTOMATISIERTEN, HOCHAUTOMATISIERTEN, VOLLAUTOMATISIERTEN ODER FAHRERLOSEN FAHREN EINES KRAFTFAHRZEUGES**
METHOD AND DEVICE FOR THE ASSISTED, PARTIALLY AUTOMATED, HIGHLY AUTOMATED, FULLY AUTOMATED OR DRIVERLESS DRIVING OF A MOTOR VEHICLE
PROCÉDÉ ET DISPOSITIF DE CONDUITE D'UN VÉHICULE AUTOMOBILE ASSISTÉE, PARTIELLEMENT AUTOMATISÉE, EN GRANDE PARTIE AUTOMATISÉE, ENTIÈREMENT AUTOMATISÉE OU SANS CONDUCTEUR

(30) Priorität: 17.11.2015 DE 102015222605
(43) Veröffentlichungstag der Anmeldung: 26.09.2018
(73) Patentinhaber: Volkswagen Aktiengesellschaft, 38440 Wolfsburg (DE); MAN Truck & Bus SE, 80995 München (DE); ZF CV Systems Europe BV, 1170 Brussels (BE)
(72) Erfinder: ROTHHÄMEL, Malte, 38442 Wolfsburg (DE); WITTE, Bastian, 38179 Schwülper (DE); OLDEMEYER, Bernd, 30851 Langenhagen (DE); WÜLBECK, Lars, 46562 Voerde (DE); WULF, Oliver, 31535 Neustadt (DE); OTREMBA, Robert, 30952 Ronnenberg (DE)
(74) Vertreter: Zucker, Volker
(86) Internationale Anmeldenummer: PCT/EP2016/077222
(87) Internationale Veröffentlichungsnummer: WO 2017/084951

(56) Entgegenhaltungen:
- EP-A1- 2 921 362
- DE-A1- 102013 021 872
- DE-A1- 102014 213 171

## Beschreibung

Die Erfindung betrifft ein Verfahren und eine Vorrichtung zum automatisierten oder fahrerlosen Fahren eines Kraftfahrzeuges. Hierbei werden die Einstufungen des Verbands der deutschen Automobilindustrie (VDA) zum automatisierten Fahren (Stufe 1 - assistiert, Stufe 2 - teilautomatisiert, Stufe 3 - hochautomatisiert, Stufe 4 - vollautomatisiert und Stufe 5 - fahrerlos) zugrunde gelegt. Alle o.a. Stufen der Automatisierung werden im Folgenden zusammenfassend als "automatisiertes Fahren" bezeichnet.

Es sind bereits Kraftfahrzeuge bekannt, die automatisiert fahren. Bei den Kraftfahrzeugen kann es sich dabei um Personenkraftwagen (PKW), Lastkraftwagen (LKW) oder Busse handeln.

Gemeinsam ist den meisten vorgeschlagenen Ausführungsformen, dass diese mindestens ein Steuergerät aufweisen, das für die Navigations- und Trajektorienplanung zuständig ist. Dies kann ein zentrales Steuergerät sein oder aber die Funktionalität ist auf mehrere Steuergeräte verteilt. Weiter weisen derartige Kraftfahrzeuge Teilsysteme auf, die fahrdynamische Anforderungen des Steuergerätes umsetzen oder Umfelddaten liefern. Dabei ist beispielsweise ein Teilsystem ein Betriebsbremssystem, ein Teilsystem ein Feststellbremssystem, ein Teilsystem ein Lenksystem, ein Teilsystem ein Antriebssystem und ein Teilsystem eine Umfeldsensorik zur Erfassung von Fahrspuren, Hindernissen und anderen Kraftfahrzeugen. Das Steuergerät erzeugt dann in Abhängigkeit der geplanten Trajektorie Steuersignale für die Teilsysteme, die dann von diesen umgesetzt werden. Diese Teilsysteme sind derart ausgebildet, dass ein Einzelfehler nicht zum Totalausfall des Teilsystems führen kann. Dies kann über Redundanzen oder Rückfallebenen erfolgen. Bei letzteren wird häufig die nicht volle Leistungsfähigkeit im Fehlerfall zur Verfügung gestellt, jedoch ausreichende Leistungsfähigkeit, um das Kraftfahrzeug noch an einem sicheren Ort zum Stillstand zu bringen.

Aus der WO 2010/048611 A1 ist eine solche Vorrichtung zum automatisierten Fahren bekannt, wobei die Teilsysteme redundant ausgebildet sind und im Fehlerfall ein Not-Stopp durchgeführt wird.

Aus der DE 10 2014 213 171 A1 ist ein System zur autonomen Fahrzeugführung bekannt, umfassend eine Mehrzahl von elektrischen und/oder elektronischen Komponenten, wobei die Komponenten dazu ausgebildet sind, zusammenwirkend eine autonome Fahrzeugführung durchzuführen. Dabei ist jede der Komponenten einer ersten Menge von Komponenten oder einer zweiten Menge von Komponenten zugeordnet, wobei die Komponenten der ersten Menge dazu ausgebildet sind, eine zumindest eingeschränkte und/oder zeitlich begrenzte autonome Fahrzeugführung auch bei Ausfall der Komponenten der zweiten Menge durchzuführen. Weiter sind die Komponenten der zweiten Menge dazu ausgebildet, eine zumindest eingeschränkte und/oder zeitlich begrenzte autonome Fahrzeugführung auch bei Ausfall der Komponenten der ersten Menge durchzuführen. Dabei wird weiter offenbart, dass dieser Notbetrieb mittels Car2x-Kommunikation an weitere Teilnehmer übermittelt wird, damit diese sich darauf einstellen können.

Aus der EP 2 921 362 A1 ist ein Verfahren zum automatisierten, teilautomatisierten, hochautomatisierten, vollautomatisierten oder fahrerlosen Fahren eines Kraftfahrzeugs bekannt, mittels mindestens eines Steuergeräts zur Navigations- und Trajektorienplanung und mehrerer Teilsysteme, wobei die Teilsysteme fahrdynamische Anforderungen des Steuergerätes umsetzen oder Umfelddaten liefern. Dabei ist dem Teilsystem für die Umfelddaten eine Überwachungsfunktion zugeordnet, die die Ausfallwahrscheinlichkeit der Sensoren überwacht. Die Überwachungsfunktion übermittelt dabei die aktuell mögliche Leistungsfähigkeit bzw. genauer die Ausfallwahrscheinlichkeit bzw. den Zeitpunkt des Ausfalls an das Steuergerät. Das Steuergerät ist derart ausgebildet, in Abhängigkeit der übermittelten Leistungsfähigkeit die Navigations- und Trajektorienplanung derart anzupassen, dass trotz einer reduzierten Leistungsfähigkeit die Fahrt fortgesetzt werden kann, indem beispielsweise eine Alternativroute ausgewählt wird, bei der die Ausfallwahrscheinlichkeit nicht mehr gegeben ist.

Aus der DE 10 2013 021 872 A1 ist ein Kraftfahrzeug bekannt, umfassend mehrere Räder sowie ein Bremssystem mit jeweils einem Rad zugeordneten, hydraulisch betätigbaren Bremsen, wenigstens einen Bremskreis, über den die Bremsen betätigbar sind, einen Bremskraftverstärker, über den der Bremskreis bedienbar ist, wobei der Bremskraftverstärker über ein vom Fahrer zu betätigendes Bremspedal betätigbar ist, sowie wenigstens eine über eine Steuerungseinrichtung steuerbare Druckerzeugungs- und/oder Druckspeichereinrichtung, über die der hydraulische Druck des Bremskreises modulierbar ist. Weiter ist wenigstens ein Elektromotor vorgesehen, über den im Fall einer erfassten Fehlfunktion innerhalb des Bremssystems durch automatisches Schalten in einem generatorischen Betrieb ein Verzögerungsmoment zum Bremsen des Fahrzeugs in den Stillstand erzeugbar ist.

Der Erfindung liegt das technische Problem zugrunde, ein Verfahren zum automatisierten Fahren eines Kraftfahrzeugs derart zu verbessern, dass die Verfügbarkeit der Funktion verbessert wird. Ein weiteres Problem ist die Schaffung einer Vorrichtung zum automatisierten Fahren, die ebenfalls die Verfügbarkeit der Funktion verbessert.

Die Lösung des technischen Problems ergibt sich durch ein Verfahren mit den Merkmalen des Anspruchs 1 sowie eine Vorrichtung mit den Merkmalen des Anspruchs 6. Weitere vorteilhafte Ausgestaltungen der Erfindung ergeben sich aus den Unteransprüchen.

Das Verfahren zum automatisierten Fahren eines Kraftfahrzeugs erfolgt mittels mindestens eines Steuergerätes zur Navigations- und Trajektorienplanung einer automatisierten Fahrt des Kraftfahrzeugs und mehreren Teilsystemen, wobei die Teilsysteme fahrdynamische Anforderungen des Steuergerätes umsetzen.

Dabei ist mindestens einem Teilsystem eine Überwachungsfunktion zugeordnet, mittels derer die Funktionalität des Teilsystems ermittelt wird. Die Überwachungsfunktion kann dabei Bestandteil des Teilsystems sein oder ein externer Beobachter. Beispielsweise wird das Bremssystem in bestimmten Situationen aktiviert und der Bremsdruck gemessen (z.B. beim Stillstand an einer roten Ampel). Die Überwachungsfunktion übermittelt dem Steuergerät eine aktuell mögliche Leistungsfähigkeit. Die aktuell mögliche Leistungsfähigkeit kann qualitativ oder quantitativ übermittelt werden. Qualitativ besteht die Nachricht beispielsweise nur aus der Information, dass die Leistungsfähigkeit eingeschränkt ist, während bei der quantitativen Übermittlung eine konkrete Zahl oder Zahlenbereich angegeben wird, beispielsweise wie groß die maximal mögliche Bremsverzögerung derzeit ist. Die Angabe der aktuell möglichen maximalen Leistungsfähigkeit kann auch einen Zeitraum umfassen, innerhalb dessen die Leistungsfähigkeit noch gegeben ist. Das Steuergerät passt dann in Abhängigkeit der übermittelten Leistungsfähigkeit die Navigations- und Trajektorienplanung derart an, dass trotz einer reduzierten Leistungsfähigkeit die automatisierte Fahrt fortgesetzt werden kann. Dabei stellt die Trajektorienplanung die kurzfristige zukünftige Bewegungsbahn des Kraftfahrzeugs innerhalb der möglichen Fahrspuren dar, wohingegen die Navigationsplanung die längerfristige Fahrtroute (Befahre die Autobahn von A nach B) darstellt. Die Anpassung kann dabei in beiden Planungen erfolgen, kann aber je nach übermittelter Leistungsfähigkeit auf eine Planung beschränkt sein. Dabei kann vorgesehen sein, dass alle Teilsysteme eine Überwachungsfunktion aufweisen und ihre Leistungsfähigkeit an das Steuergerät übermitteln. Dabei kann vorgesehen sein, dass einzelne Teilsysteme die Leistungsfähigkeit quantitativ und andere nur qualitativ übermitteln. Die Teilsysteme sind ein Betriebsbremssystem, ein Feststellbremssystem, ein Lenksystem, ein Antriebssystem und ein Getriebesystem.

Weiter bereitet das Steuergerät bei einer übermittelten reduzierten Leistungsfähigkeit eines Teilsystems mindestens ein weiteres System oder Teilsystem derart vor, dass dieses mindestens partiell das Teilsystem mit der reduzierten Leistungsfähigkeit unterstützt. So wird ein Retarder oder eine Abgasbremse auf den Einsatz vorbereitet, indem beispielsweise Gang und/oder Geschwindigkeit in Bereiche besserer Wirkungsgrade für diese Systeme geändert werden. Derartige Bremssysteme kommen insbesondere bei modernen LKWs zum Einsatz. Ein weiteres System ist alternativ ein Hybridantriebssystem, das bei reduzierter Leistungsfähigkeit auf ein erhöhtes rekuperatives Bremsen eingestellt wird. Bei einer reduzierten Leistungsfähigkeit des Lenkungssystems können Lenkeingriffe auch durch unsymmetrische Bremseingriffe umgesetzt werden, wozu vorher gegebenenfalls die Geschwindigkeit derart anzupassen ist, dass die Betriebsbremse hierfür zur Verfügung steht.

Weiter werden bei reduzierter Leistungsfähigkeit mindestens eines Teilsystems Straßenabschnitte mit vorbestimmten Eigenschaften bei der Navigationsplanung nicht mehr berücksichtigt. So ist bei einer reduzierten Leistungsfähigkeit des Betriebsbremssystems vorgesehen, dass Straßen mit einem Gefälle größer einem Grenzwert für das Gefälle nicht mehr befahren werden. Sind solche Straßen in der Navigationsplanung enthalten gewesen, so berechnet das Steuergerät eine Alternativ-Route unter Ausschluss derartiger Straßen. Bei einer reduzierten Leistungsfähigkeit des Lenksystems können beispielsweise kurvenreiche Straßen ausgenommen werden. Der Grundgedanke ist dabei, gezielte Straßenabschnitte bei der Navigationsplanung zu verwenden, die mit der reduzierten Leistungsfähigkeit sicher befahren werden können, sodass trotz der reduzierten Leistungsfähigkeit die automatisierte Fahrt fortgesetzt werden kann.

In einer Ausführungsform ist mindestens ein weiteres Teilsystem zum Liefern von Umfelddaten vorhanden, dem eine Überwachungsfunktion zugeordnet ist, die die aktuelle Leistungsfähigkeit an das Steuergerät übermittelt. Das weitere Teilsystem ist beispielsweise eine Sensorik zur Erfassung von Fahrspuren, Hindernissen und anderen Fahrzeugen.

In einer Ausführungsform berechnet das Steuergerät zusätzlich Stabilisierungsfunktionen (wie z.B. ESP-Eingriffe), wobei bei einer reduzierten Leistungsfähigkeit mindestens eines Teilsystems die Navigations- und Trajektorienplanung derart angepasst wird, dass Stabilisierungsfunktionen nicht durchgeführt werden müssen. Dies kann z.B. durch eine bewusst defensive Fahrweise erreicht werden.

In einer weiteren Ausführungsform wird die Geschwindigkeit des Kraftfahrzeugs und/oder ein einzuhaltender Sicherheitsabstand zu einem vorausfahrenden Kraftfahrzeug erhöht. Beide Maßnahmen bewirken, dass trotz einer reduzierten Leistungsfähigkeit der Betriebsbremseinrichtung die Fahrt fortgesetzt werden kann. Beide Maßnahmen stellen dabei Änderungen der Trajektorienplanung dar.

In einer weiteren Ausführungsform werden im Umfeld des Kraftfahrzeuges befindliche weitere Kraftfahrzeuge über eine Car2Car-Schnittstelle über die reduzierte Leistungsfähigkeit und/oder eine angepasste Fahrweise informiert. Dadurch kann sich das Umfeld auf die angepasste Fahrweise einstellen und beispielsweise auch Anpassungen bezüglich Geschwindigkeit und Sicherheitsabstand vornehmen bzw. allgemein die Trajektorienplanung anpassen.

In einer weiteren Ausführungsform ermittelt die Navigationsplanung in Abhängigkeit der reduzierten Leistungsfähigkeit einen geeigneten Haltepunkt für das Kraftfahrzeug, beispielsweise eine noch erreichbare Werkstatt, einen geeigneten Parkplatz oder die nächste Nothaltebucht.

Die Erfindung wird nachfolgend anhand eines bevorzugten Ausführungsbeispiels näher erläutert. Die einzige Figur zeigt ein schematisches Blockschaltbild einer Vorrichtung zum automatisierten Fahren eines Kraftfahrzeugs.

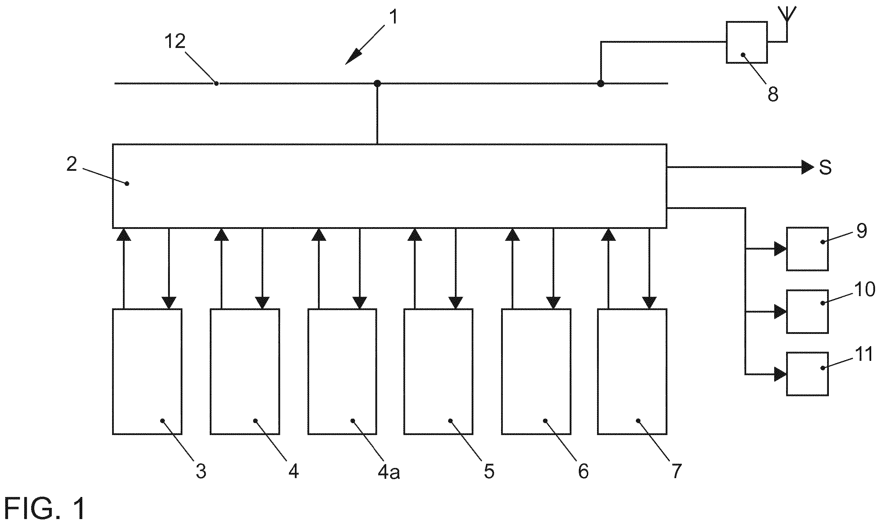

In Fig. 1 ist eine Vorrichtung 1 zum automatisierten Fahren eines Kraftfahrzeugs dargestellt. Die Vorrichtung 1 umfasst ein Steuergerät 2, verschiedene Teilsysteme 3-7, eine Car2Car-Schnittstelle 8 sowie weitere Systeme 9-11. Das Steuergerät 2 ist für die Navigations- und Trajektorienplanung sowie Stabilisierungsfunktionen der automatisierten Fahrt zuständig. Dabei kann das Steuergerät 2 ein einzelnes zentrales Steuergerät sein oder aber auf mehrere Steuergeräte aufgeteilt sein. Das Steuergerät 2 ist bidirektional mit den Teilsystemen 3-7 verbunden. Die Teilsysteme 3-7 stellen dabei die Sensorik (z.B. Kamera, Radar, Ultraschall, Lidar etc.) und Aktorik der Vorrichtung 1 dar. So ist beispielsweise das Teilsystem 3 mindestens eine Sensoreinheit zur Erfassung des Umfeldes des Kraftfahrzeugs, das Teilsystem 4 ein Betriebsbremssystem, das Teilsystem 4a das Feststellbremssystem, das Teilsystem 5 ein Lenkungssystem, das Teilsystem 6 ein Antriebssystem und das Teilsystem 7 ein Getriebesystem. Die Teilsysteme 3-7 setzen dabei Soll-Vorgaben um, die das Steuergerät 2 aufgrund der Navigations- und Trajektorienplanung sowie der Stabilisierungsfunktionen vorgibt. Im Vorfeld übermitteln dabei die Teilsysteme 3-7 ihre Leistungsfähigkeit an das Steuergerät 2. Hierzu verfügen die Teilsysteme 3-7 über Überwachungsfunktionen, mittels derer die verfügbare Leistungsfähigkeit qualitativ oder quantitativ ermittelt werden kann. Dabei kann diese Angabe beispielsweise darin bestehen, welche maximale Soll-Vorgabe das Teilsystem 3-7 überhaupt umsetzen kann. Beim Betriebsbremssystem kann dies beispielsweise ein Wert für eine maximale Verzögerung sein. Die Angabe kann aber auch darin bestehen, dass eine Teilfunktion nicht zur Verfügung steht (z.B. 4. Gang zur Zeit nicht verfügbar) oder dass eine bestimmte Soll-Vorgabe nur zeitlich begrenzt und/oder für eine begrenzte Anzahl von Aktionen zur Verfügung steht. Somit kann das Steuergerät 2 die Soll-Vorgaben an die Teilsysteme 3-7 an die verfügbare Leistungsfähigkeit der Teilsysteme 3-7 anpassen. Über die Car2Car-Schnittstelle 8 kann dabei das Steuergerät 2 andere Kraftfahrzeuge im Umfeld über seine angepasste Fahrweise informieren. Des Weiteren können über die Car2Car-Schnittstelle 8 auch Informationen von anderen Fahrzeugen empfangen werden (beispielsweise dass diese auch aufgrund einer reduzierten Leistungsfähigkeit ihr Fahrverhalten angepasst haben) und bei der Navigations- und Trajektorienplanung im Steuergerät 2 berücksichtigt werden. Das Steuergerät 2 ist dabei über ein Bussystem 12 mit der Car2Car-Schnittstelle 8 verbunden, über das das Steuergerät 2 weitere Informationen von anderen Steuergeräten und Sensoriken erhalten kann. Die weiteren Systeme 9-11 sind beispielsweise ein Retarder, eine Abgasbremse und eine Elektromaschine bzw. ein Hybridsteuergerät. Schließlich gibt das Steuergerät 2 auch vorab Ansteuersignale S für weitere Systeme wie beispielsweise Fahrtrichtungsanzeiger aus.

Die Wirkungsweise der Vorrichtung 1 soll kurz anhand eines Szenariums erläutert werden. Dabei sei angenommen, dass das Betriebsbremssystem eine reduzierte Leistungsfähigkeit an das Steuergerät 2 gemeldet hat, wohingegen alle anderen Teilsysteme volle Leistungsfähigkeit aufweisen. Das Steuergerät 2 reagiert auf die reduzierte Leistungsfähigkeit, indem die Geschwindigkeit als Sollvorgabe an das Teilsystem 6 reduziert wird. Zusätzlich passt das Steuergerät 2 bei seiner Trajektorienplanung den Sicherheitsabstand zu einem vorausfahrenden Kraftfahrzeug an. Das Getriebesystem wird mittels einer angepassten Sollvorgabe derart eingestellt, dass mindestens eines der Systeme 9-11 im Bedarfsfall in einem Arbeitspunkt mit gutem Wirkungsgrad betrieben werden kann, um zusätzliche Bremsleistung zur Verfügung zu stellen. Hierdurch kann trotz reduzierter Leistungsfähigkeit oder sogar Teilausfall eines Teilsystems 3-7 die automatisierte Fahrt zumindest bis zum Erreichen eines sicheren Abstellplatzes fortgesetzt werden.

## Patentansprüche

1. Verfahren zum assistierten, teilautomatisierten, hochautomatisierten, vollautomatisierten oder fahrerlosen Fahren eines Kraftfahrzeuges, mittels mindestens eines Steuergerätes (2) zur Navigations- und Trajektorienplanung einer assistierten, teilautomatisierten, hochautomatisierten, vollautomatisierten oder fahrerlosen Fahrt des Kraftfahrzeugs und mehreren Teilsystemen (4 - 7), wobei die Teilsysteme (4 - 7) fahrdynamische Anforderungen des Steuergerätes (2) umsetzen, wobei mindestens einem Teilsystem (4 - 7) eine Überwachungsfunktion zugeordnet ist, mittels derer die Funktionalität des Teilsystems (4 - 7) ermittelt wird, wobei
die Überwachungsfunktion dem Steuergerät (2) eine aktuell mögliche Leistungsfähigkeit übermittelt, wobei das Steuergerät (2) in Abhängigkeit der übermittelten Leistungsfähigkeit die Navigations- und Trajektorienplanung derart anpasst, dass trotz einer reduzierten Leistungsfähigkeit die assistierte, teilautomatisierte, hochautomatisierte, vollautomatisierte oder fahrerlose Fahrt fortgesetzt werden kann, wobei
die Teilsysteme (4-7) ein Betriebsbremssystem, ein Feststellbremssystem, ein Lenkungssystem, ein Antriebssystem und ein Getriebesystem sind, wobei das Steuergerät (2) bei einer übermittelten reduzierten Leistungsfähigkeit eines Teilsystems (4-7) mindestens ein weiteres System (9-11) derart vorbereitet, dass dieses mindestens partiell das Teilsystem (4-7) unterstützt, wobei bei einer reduzierten Leistungsfähigkeit des Betriebsbremssystems ein Retarder und/oder eine Abgasbremse und/oder ein rekuperatives Bremsen einer Elektromaschine vorbereitet wird, **dadurch gekennzeichnet, dass** Straßenabschnitte mit vorbestimmten Eigenschaften bei der Navigationsplanung nicht mehr berücksichtigt werden, wobei
eine vorbestimmte Eigenschaft ein Gefälle größer einem Grenzwert ist.

2. Verfahren nach Anspruch 1, **dadurch gekennzeichnet, dass** mindestens ein weiteres Teilsystem (3) zum Liefern von Umfelddaten vorhanden ist, dem eine Überwachungsfunktion zugeordnet ist, die die aktuelle Leistungsfähigkeit übermittelt.

3. Verfahren nach einem der vorangegangenen Ansprüche, **dadurch gekennzeichnet, dass** die Geschwindigkeit des Kraftfahrzeugs reduziert und/oder ein einzuhaltender Sicherheitsabstand zu einem vorausfahrenden Kraftfahrzeug erhöht wird.

4. Verfahren nach einem der vorangegangenen Ansprüche, **dadurch gekennzeichnet, dass** im Umfeld des Kraftfahrzeugs befindliche weitere Kraftfahrzeuge über eine Car2Car-Schnittstelle (8) über die reduzierte Leistungsfähigkeit und/oder die angepasste Fahrweise informiert werden.

5. Verfahren nach einem der vorangegangenen Ansprüche, **dadurch gekennzeichnet, dass** in Abhängigkeit der reduzierten Leistungsfähigkeit die Navigationsplanung einen geeigneten Haltepunkt ermittelt.

6. Vorrichtung (1) zum assistierten, teilautomatisierten, hochautomatisierten, vollautomatisierten oder fahrerlosen Fahren eines Kraftfahrzeugs, umfassend mindestens ein Steuergerät (2) zur Navigations- und Trajektorienplanung und mehrere Teilsysteme (4 - 7), wobei die Teilsysteme (4 - 7) derart ausgebildet sind, fahrdynamische Anforderungen des Steuergeräts (2) umzusetzen, wobei mindestens einem Teilsystem (4 - 7) eine Überwachungsfunktion zugeordnet ist, die derart ausgebildet ist, eine Funktionalität des Teilsystems (4 - 7) zu ermitteln, wobei
die Überwachungsfunktion derart ausgebildet ist, dem Steuergerät (2) eine aktuell mögliche Leistungsfähigkeit zu übermitteln, wobei das Steuergerät (2) derart ausgebildet ist, dass in Abhängigkeit der übermittelten Leistungsfähigkeit die Navigations- und Trajektorienplanung derart angepasst wird, dass trotz einer reduzierten Leistungsfähigkeit die assistierte, teilautomatisierte, hochautomatisierte, vollautomatisierte oder fahrerlose Fahrt fortgesetzt werden kann, wobei
die Teilsysteme (4-7) ein Betriebsbremssystem, ein Feststellbremssystem, ein Lenkungssystem, ein Antriebssystem und ein Getriebesystem sind, wobei das Steuergerät (2) derart ausgebildet ist, dass bei einer übermittelten reduzierten Leistungsfähigkeit eines Teilsystems (4-7) mindestens ein weiteres System (9-11) derart vorbereitet wird, dass dieses mindestens partiell das Teilsystem (4-7) unterstützt, wobei das Teilsystem (4) eine Betriebsbremse ist, wobei das mindestens eine weitere System (9-11) als Retarder und/oder Abgasbremse und/oder als rekuperative Bremse einer Elektromaschine ausgebildet ist, **dadurch gekennzeichnet, dass** das Steuergerät derart ausgebildet ist,
bei einer reduzierten Leistungsfähigkeit des Betriebsbremssystems Straßenabschnitte mit vorbestimmten Eigenschaften bei der Navigationsplanung nicht mehr zu berücksichtigen, wobei eine vorbestimmte Eigenschaft ein Gefälle größer einem Grenzwert ist.

7. Vorrichtung nach Anspruch 6, **dadurch gekennzeichnet, dass** die Vorrichtung (1) mindestens ein weiteres Teilsystem (3) zum Liefern von Umfelddaten aufweist, dem eine Überwachungsfunktion zugeordnet ist, die derart ausgebildet ist, eine aktuell mögliche Leistungsfähigkeit an das Steuergerät (2) zu übermitteln.

## Claims

1. Method for assisted, partially automated, highly automated, fully automated or driverless driving of a motor vehicle, by means of at least one control unit (2) for navigation and trajectory planning of an assisted, partially automated, highly automated, fully automated or driverless journey of the motor vehicle, and a plurality of subsystems (4 - 7), wherein the subsystems (4 - 7) implement driving dynamics requirements of the control unit (2), wherein at least one subsystem (4 - 7) is assigned a monitoring function by means of which the functionality of the subsystem (4 - 7) is determined, wherein
the monitoring function transmits a currently possible performance capability to the control unit (2), wherein the control unit (2) adapts the navigation and trajectory planning depending on the transmitted performance capability such that the assisted, partially automated, highly automated, fully automated or driverless journey can be continued despite a reduced performance capability, wherein
the subsystems (4-7) are a service brake system, a parking brake system, a steering system, a drive system and a transmission system, wherein, in the event of a transmitted reduced performance capability of a subsystem (4-7), the control unit (2) prepares at least one further system (9-11) such that this at least partially supports the subsystem (4-7), wherein a retarder and/or an exhaust brake and/or a recuperative braking of an electric machine is prepared in the event of a reduced performance capability of the service brake system,
**characterized in that** road portions having predetermined characteristics are no longer taken into account in the navigation planning, wherein
a predetermined characteristic is a gradient greater than a limit value.

2. Method according to claim 1, **characterized in that** at least one further subsystem (3) for supplying environmental data is present, to which a monitoring function is assigned which transmits the current performance capability.

3. Method according to any of the preceding claims, **characterized in that** the speed of the motor vehicle is reduced and/or a safety distance to be maintained from a motor vehicle driving ahead is increased.

4. Method according to any of the preceding claims, **characterized in that** other motor vehicles in the vicinity of the motor vehicle are informed about the reduced performance capability and/or the adapted driving style via a Car2Car interface (8).

5. Method according to any of the preceding claims, **characterized in that** depending on the reduced performance capability, the navigation planning determines a suitable stopping point.

6. Device (1) for assisted, partially automated, highly automated, fully automated or driverless driving of a motor vehicle, the device comprising at least one control unit (2) for navigation and trajectory planning and a plurality of subsystems (4 - 7), wherein the subsystems (4 - 7) are designed to implement driving dynamics requirements of the control unit (2), wherein at least one subsystem (4 - 7) is assigned a monitoring function which is designed to determine a functionality of the subsystem (4 - 7), wherein
the monitoring function is designed to transmit a currently possible performance capability to the control unit (2), wherein the control unit (2) is designed such that, depending on the transmitted performance capability, the navigation and trajectory planning is adapted such that the assisted, partially automated, highly automated, fully automated or driverless journey can be continued despite a reduced performance capability, wherein
the subsystems (4-7) are a service brake system, a parking brake system, a steering system, a drive system and a transmission system, wherein
the control unit (2) is designed such that, in the event of a transmitted reduced performance capability of a subsystem (4-7), at least one further system (9-11) is prepared such that it at least partially supports the subsystem (4-7), wherein the subsystem (4) is a service brake, wherein the at least one further system (9-11) is designed as a retarder and/or exhaust brake and/or as a recuperative brake of an electric machine, **characterized in that** the control unit is designed in such a way that, in the event of a reduced performance capability of the service braking system, road portions having predetermined characteristics are no longer taken into account in the navigation planning, wherein a predetermined characteristic is a gradient greater than a limit value.

7. Device according to claim 6, **characterized in that** the device (1) has at least one further subsystem (3) for supplying environmental data, to which a monitoring function is assigned which is designed to transmit a currently possible performance capability to the control unit (2).

## Revendications

1. Procédé permettant la conduite d'un véhicule automobile assistée, partiellement automatisée, en grande partie automatisée, entièrement automatisée ou sans conducteur, à l'aide d'au moins un appareil de commande (2) pour la planification de la navigation et de la trajectoire d'un parcours du véhicule automobile assisté, partiellement automatisé, en grande partie automatisé, entièrement automatisé ou sans conducteur et de plusieurs sous-systèmes (4 - 7), dans lequel les sous-systèmes (4 - 7) appliquent des exigences de dynamique de conduite de l'appareil de commande (2), dans lequel une fonction de surveillance est associée à au moins un sous-système (4 - 7), à l'aide de laquelle la fonctionnalité du sous-système (4 - 7) est déterminée, dans lequel
la fonction de surveillance transmet à l'appareil de commande (2) une capacité de performance actuellement possible, dans lequel l'appareil de commande (2) adapte, en fonction de la capacité de performance transmise, la planification de la navigation et de la trajectoire de telle sorte que, malgré une capacité de performance réduite, le parcours assisté, partiellement automatisé, en grande partie automatisé, entièrement automatisé ou sans conducteur peut être poursuivi, dans lequel
les sous-systèmes (4-7) sont un système de freinage de service, un système de freinage de stationnement, un système de direction, un système d'entraînement et un système de transmission, dans lequel l'appareil de commande (2) prépare, en cas de transmission d'une capacité de performance réduite d'un sous-système (4-7), au moins un autre système (9-11) de telle sorte que celui-ci assiste au moins partiellement le sous-système (4-7), dans lequel un ralentisseur et/ou un frein sur gaz d'échappement et/ou un freinage récupératif d'une machine électrique sont préparés en cas de capacité de performance réduite du système de freinage de service, **caractérisé en ce que** des sections de route comportant des propriétés prédéterminées ne sont plus pris en compte dans la planification de la navigation, dans lequel
une propriété prédéterminée est une pente supérieure à une valeur limite.

2. Procédé selon la revendication 1, **caractérisé en ce qu'il** existe au moins un autre sous-système (3) pour la délivrance de données d'environnement, auquel est associée une fonction de surveillance qui transmet la capacité de performance actuelle.

3. Procédé selon l'une des revendications précédentes,
**caractérisé en ce que** la vitesse du véhicule automobile est réduite et/ou une distance de sécurité à respecter par rapport à un véhicule automobile qui le précède est augmentée.

4. Procédé selon l'une des revendications précédentes,
**caractérisé en ce que** d'autres véhicules automobiles se trouvant dans l'environnement du véhicule automobile sont informés par une interface Car2Car (8) de la capacité de performance réduite et/ou du mode de conduite adapté.

5. Procédé selon l'une des revendications précédentes,
**caractérisé en ce que,** en fonction de la capacité de performance réduite, la planification de la navigation détermine un point d'arrêt approprié.

6. Dispositif (1) permettant la conduite d'un véhicule automobile assistée, partiellement automatisée, en grande partie automatisée, entièrement automatisée ou sans conducteur, comprenant au moins un appareil de commande (2) pour la planification de la navigation et de la trajectoire et plusieurs sous-systèmes (4 - 7), dans lequel les sous-systèmes (4 - 7) sont conçus de manière à appliquer des exigences de dynamique de conduite de l'appareil de commande (2), dans lequel une fonction de surveillance est associée à au moins un sous-système (4 - 7), laquelle est conçue de manière à déterminer une fonctionnalité du sous-système (4 - 7), dans lequel
la fonction de surveillance est conçue de manière à transmettre à l'appareil de commande (2) une capacité de performance actuellement possible, dans lequel l'appareil de commande (2) est conçu de telle sorte que, en fonction de la capacité de performance transmise, la planification de la navigation et de la trajectoire est adaptée de telle sorte que, malgré une capacité de performance réduite, le trajet assisté, partiellement automatisé, en grande partie automatisé, entièrement automatisé ou sans conducteur peut être poursuivi, dans lequel
les sous-systèmes (4-7) sont un système de freinage de service, un système de freinage de stationnement, un système de direction, un système d'entraînement et un système de transmission, dans lequel
l'appareil de commande (2) est conçu de telle sorte que, dans le cas d'une capacité de performance réduite transmise d'un sous-système (4-7), au moins un autre système (9-11) est préparé de telle sorte que celui-ci assiste au moins partiellement le sous-système (4-7), dans lequel le sous-système (4) est un frein de service, dans lequel l'au moins un autre système (9-11) est conçu comme un ralentisseur et/ou un frein sur gaz d'échappement et/ou comme un frein récupératif d'une machine électrique, **caractérisé en ce que** l'appareil de commande est conçu de manière à ne plus tenir compte, lors de la planification de la navigation, de sections de route comportant des propriétés prédéterminées lorsque la capacité de performance du système de freinage de service est réduite, dans lequel une propriété prédéterminée est une pente supérieure à une valeur limite.

7. Dispositif selon la revendication 6, **caractérisé en ce que** le dispositif (1) présente au moins un autre sous-système (3) pour la délivrance de données d'environnement, auquel est associée une fonction de surveillance qui est conçue de manière à transmettre une capacité de performance actuellement possible à l'appareil de commande (2).
